# EUROPÄISCHE PATENTSCHRIFT

(11) **EP 0 967 185 B1**
(45) Veröffentlichungstag und Bekanntmachung des Hinweises auf die Patenterteilung: **08.09.2004**
(21) Anmeldenummer: 99111569.2
(22) Anmeldetag: 15.06.1999
(51) Int. Cl.: C04B 7/19

(54) **Hüttensandhaltiges Zement**
Cement, containing slag-sand
Ciment, contenant du sable de laitier

(30) Priorität: 25.06.1998 DE 19828326
(43) Veröffentlichungstag der Anmeldung: 29.12.1999
(73) Patentinhaber: Alsen AG, 20457 Hamburg (DE)
(72) Erfinder: Clemens, Paul, Dipl.-Ing., 15566 Schöneiche (DE); Bachmann, Georg, Dr. rer. nat., 25588 Oldendorf (DE); Höppner Matthias, Dr. rer. nat., 31167 Bockenem (DE)
(74) Vertreter: Patentanwälte Hauck, Graalfs, Wehnert, Döring, Siemons, Schildberg

(56) Entgegenhaltungen:
- DE-A- 2 215 586
- DATABASE WPI Week 9747 Derwent Publications Ltd., London, GB; AN 1997-508704 XP002116976 & JP 09 241047 A (SUMITOMO METAL IND)
- DATABASE WPI Week 8024 Derwent Publications Ltd., London, GB; AN 1980-42540C XP002116977 & JP 55 060046 A (NIPPON STEEL)
- DATABASE WPI Week 9615 Derwent Publications Ltd., London, GB; AN 1996-146827 XP002116978 & JP 08 034654 A (YAWATA KORO CONCRETE)

## Beschreibung

Die Erfindung bezieht sich auf einen Zement nach Patentanspruch 1.

Die wesentlichen Eigenschaften von Zement, wie zeitlicher Ablauf von Erstarrung und Erhärtung, Festigkeitseigenschaften und chemische Widerstandsfähigkeit sind bekanntlich abhängig von Zusammensetzung der Rohstoffe, Mengenanteil der zugemahlenen Bestandteile und von der Mahlfeinheit. Die wichtigsten Zementsorten sind Portlandzement, Portlandhüttenzement, Hochofenzement, Portlandputzolanzement usw. Es ist bekannt, bei Portlandzement einen Teil durch Hüttensand zu substituieren. Hüttensand (granulierte Hochofenschlacke) ist bekanntlich ein latent hydraulischer Stoff, der bei geeigneter Anregung hydraulische Eigenschaften entwickelt. Ein derartiger hüttensandhaltiger Portlandzement wird auch als Portlandhüttenzement bezeichnet und hat gemäß Norm die Kurzbezeichnung CEM II. Bei einem Hüttensandanteil von 6 bis 20% wird der Kurzbezeichnung ein A und bei einem Anteil von 6 bis 35% der Buchstabe B hinzugefügt. Es ist ferner üblich, einen Zement durch seine Festigkeitsklasse zu charakterisieren, zum Beispiel 32,5, 42,5, 52,5 usw. Handelt es sich um einen Zement mit hoher Anfangsfestigkeit, erhält die Kurzbezeichnung zusätzlich ein R.

Bei den herkömmlichen hüttensandhaltigen Zementen wird der Hüttensand üblicherweise auf Mahlfeinheiten von 3500 bis 4500 cm²/g nach Blaine aufgemahlen. Allerdings sind auch höhere Feinheiten bekannt. Bei der getrennten Mahlung von Hüttensand in Kreislaufmahlanlagen fällt beim Sichtprozeß neben dem Fertigprodukt (Hüttensandmehl) auch der sonst als interner Rückgutstrom bezeichnete Hüttensandgrieß an. Der Hüttensandgrieß hat üblicherweise eine Mahlfeinheit von 1700 bis 2000 cm²/g nach Blaine, während das als Fertiggut produzierte Hüttensandmehl die spezifische Oberfläche von z.B. 3500 cm²/g nach Blaine und mehr aufweist.

Portlandhüttenzemente lassen sich grundsätzlich sowohl durch gemeinsames Vermahlen der Hauptkomponenten als auch durch Mischen getrennt aufgegebener Hauptkomponenten herstellen.

Aus DATABASE WPI Week 9747 Derwent Publications Ltd., London, GB; AN 1997-508704 XP002116976 & JP 09 241047 A (SUMITOMO METAL IND) ist bekannt geworden, einem Bindemittel, das 20 bis 95 Gew.-% Portlandzement aufweist, 5 bis 80 Gew.-% granulierte Hochofenschlacke zuzusetzen, wobei Feinanteile abgetrennt werden. Das Bindemittel dient zur Herstellung von Betonteilen durch ein Schleuderverfahren, wobei der Überschuß an Wasser optimal zu entfernen ist. Bei der Herstellung wird Hüttensandmehl mit einem Feinheitsgrad von 3500 bis 8000 nach Blaine durch ein entsprechendes Mahlverfahren hergestellt. Anschließend werden Feinbestandteile < 5µm entfernt.

Aus DE 22 15 586 A ist bekannt, das bei der Mineralwolleherstellung anfallende Mineralwollegrieß bei der Herstellung von Portlandhüttenzement zu verwenden. Aus DATABASE WPI Week 9615 Derwent Publications Ltd., London, GB; AN 1996-146827 XP002116978 & JP 08 034654 A (YAWATA KORO CONCRETE) ist bekannt geworden, recycelten Beton zu bestimmten Korngrößen zu vermahlen und mit Hüttensand zu mischen. Beton ist hierbei Anreger für den Hüttensand.

Der Erfindung liegt die Aufgabe zugrunde, einen Zement zu schaffen, das durch Mischen bei optimalen bzw. normgerechten Festigkeitseigenschaften und entsprechender Festigkeitsentwicklung verbesserte anwendungstechnische Eigenschaften aufweist sowie bei seiner Herstellung einen geringeren Energiebedarf hat.

Diese Aufgabe wird durch die Merkmale des Patentanspruchs 1 gelöst.

Bei dem erfindungsgemäßen Zement wird ein Teil nicht durch Hüttensandmehl mit einem relativ feinen Mahlheitsgrad substituiert, sondern durch Hüttensandgrieß. Hüttensandgrieß hat bekanntlich eine viel geringere Mahlfeinheit als Hüttensandmehl, vorzugsweise im Bereich von 1700 bis 2100 cm²/g nach Blaine. Gleichwohl hat sich überraschend gezeigt, daß die Festigkeitsentwicklung eines Zements typischerweise der Druckfestigkeit nach einem Tag, nach zwei, sieben bzw. achtundzwanzig Tagen durchaus der der reinen Portlandzemente (CEMI) gleicher Festigkeitsklasse nahekommt. Dabei ist besonders hervorzuheben, daß die Druckfestigkeit nach z.B. zwei Tagen der von CEMI-Zementen gleicher Festigkeitsklasse entspricht und die 28-Tage-Druckfestigkeit, wie sonst bei hüttensandhaltigen Kompositzementen mit dieser Anfangs-Druckfestigkeit üblich, den oberen Grenzwert nicht überschreiten.

Die Verwendung von Hüttensandgrieß ist mit deutlichen Energieeinsparungen verbunden. Es wird ein Zement mit Portlandzementeigenschaften erhalten, der jedoch nur einen Teil Portlandklinker enthält. Dadurch ist die zu brennende Menge an Portlandzementklinkern deutlich reduziert, was zu einem entsprechend verringerten Energieaufwand führt. Darüber hinaus ist die Herstellung eines derartigen Zements wegen geringerer Emissionen ökologisch vorteilhafter. Da der Hüttensand nur eine relativ geringe Mahlfeinheit aufweisen muß, d.h. nicht in der üblichen Weise feinvermahlen wird, wird auch hier eine deutliche Energieeinsparung erhalten.

Bei einem erfindungsgemäßen Zement kann der Anteil von Hüttensandgrieß maximal 6 bis80% betragen. Bevorzugt sind engere Bereiche von 6 bis 65 bzw. 6 bis 35 bzw. 6 bis 20%. Ein erfindungsgemäßer Portlandzement weist z.B. eine spezifische Oberfläche von mindestens 3000 bis 5500 cm²/g nach Blaine auf.

Untersuchungen haben ergeben, daß die erfindungsgemäße Mischung besonders günstige, anwendungstechnische Eigenschaften bei Zementen für die Estrichverlegung aufweisen.

Die Erfindung ist nicht nur vorteilhaft für die oben angegebenen Zementsorten, sondern auch für solche Zementsorten, bei denen es zulässig ist, Hüttensand als sogenannten Nebenbestandteil oder Zumahlstoff zu verwenden, so z.B. bei Portlandpuzzolanzement, Portlandflugaschezement, Portlandölschieferzement oder Portlandkalksteinzement, Hüttensandgrieß mit einem Anteil von 0 bis 5% zuzumischen. Die Mahlfeinheit des Hüttensandgrießes liegt im oben angegebenen Rahmen. Es versteht sich, daß bei einer Zumischung von Hüttensandgrieß mit einem Anteil von < 5% der restliche Anteil bis 5% durch andere an sich bekannte Nebenbestandteile aufgefüllt werden kann. Bekanntlich müssen jedoch nach deutschen Standards Nebenbestandteile stofflich von der Hauptkomponente differieren.

Die Verwendung von Hüttensandgrieß als Nebenbestandteil hat vor allen Dingen zur Folge, daß bei der Herstellung eines Zements mit diesem Nebenbestandteil eine gewisse Energieeinsparung erhalten wird. Im übrigen ist auch sonst die Verwendung von Hüttensandgrieß ein vom Aufwand her günstiger Ausgangsstoff.

Nachstehend ein Beispiel für einen Portlandhüttenzement herkömmlicher Art und Beispiele für Portlandhüttenzemente nach der Erfindung, und zwar zum einen für die Transportbetonindustrie und zum anderen für Estrichleger:

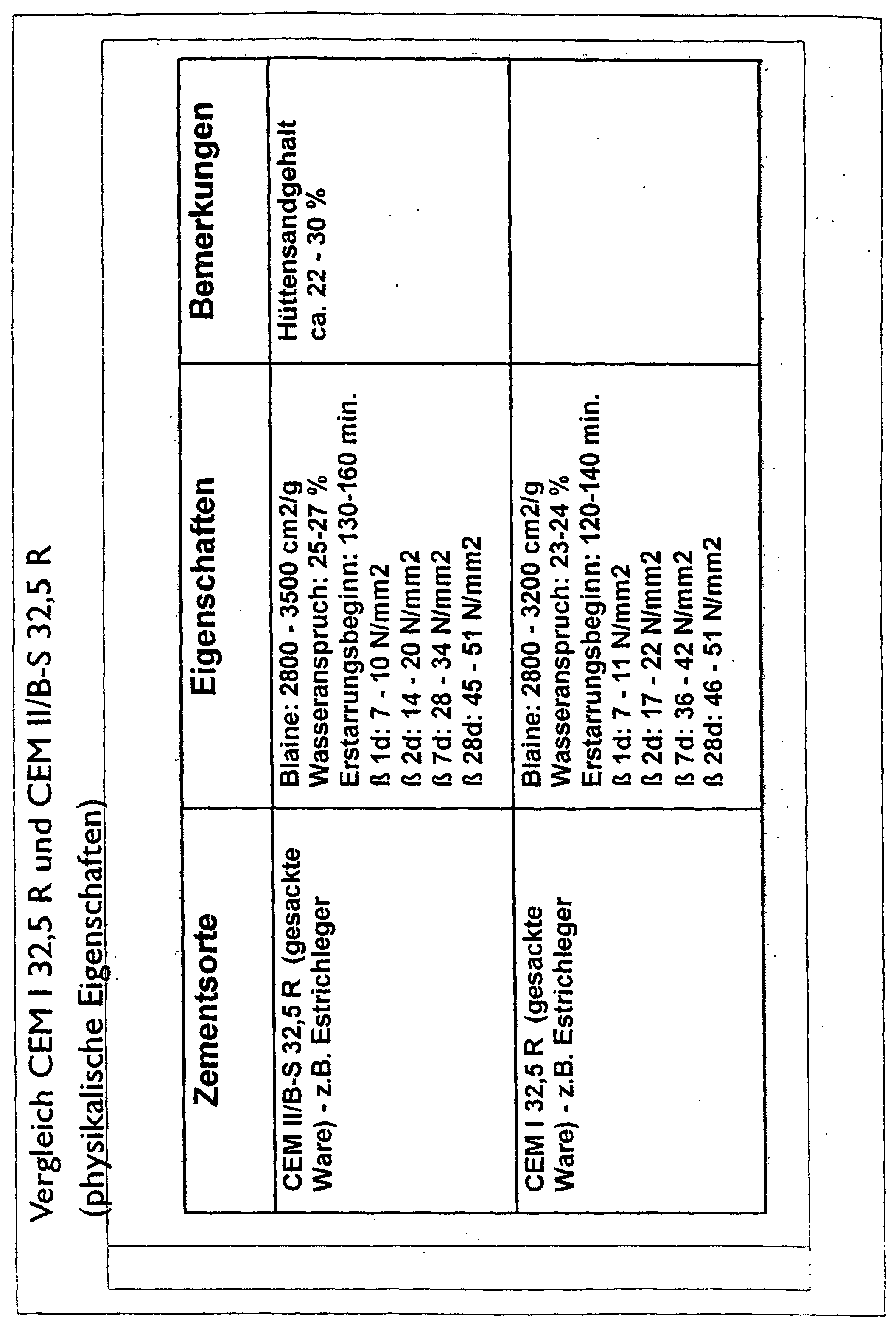

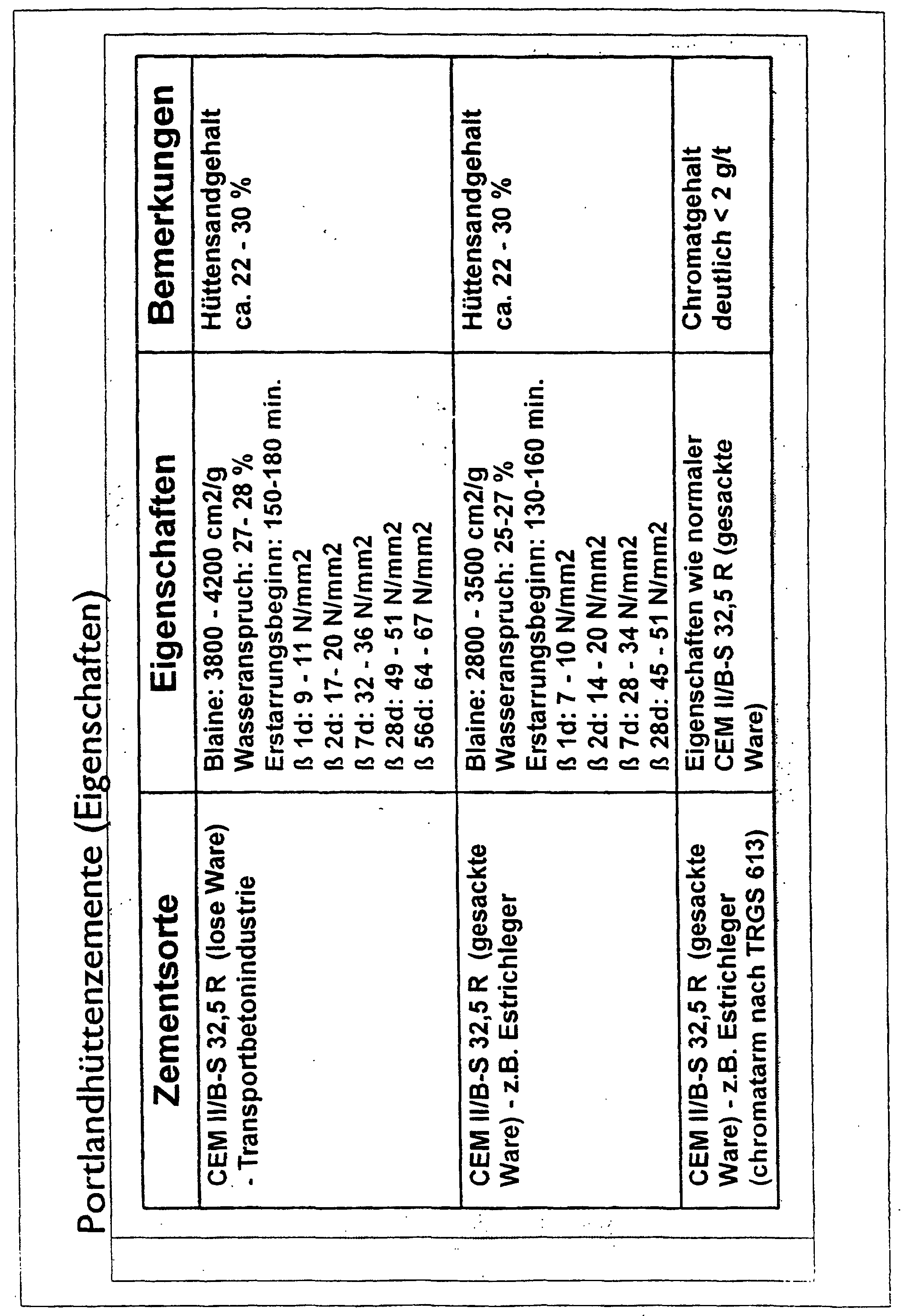

Die Herstellung eines erfindungsgemäßen Zements kann mit herkömmlichen Mischanlagen erfolgen, beispielsweise mit einer Mischanlage zum Mischen von Portlandhüttenzementen und Hüttensandmehl. Statt Hüttensandmehl wird Hüttensandgrieß in den Mischer gegeben. Alternativ kann eine herkömmliche Mahlanlage zur Herstellung von feinen oder hochfeinen Zementen verwendet werden. In dieser wird z.B. Portlandzementklinker zu einem Klinkermehl vorgemahlen mit einer spezifischen Oberfläche von 2000 bis 2800 cm²/g nach Blaine und gemeinsam mit einem Hüttensandgrieß mit der spezifischen Oberfläche von 1700 bis 2000 cm²/g nach Blaine und einem feinteiligen Sulfatträger (Gips) fertiggemahlen, zum Beispiel in einer Durchlaufkugelmühle. Eine derartige Mahlanlage kann auch zur Herstellung eines erfindungsgemäßen Zements verwendet werden, indem zum Beispiel Hüttensandgrieß hinter der Kugelmühle in einen Mischer gegeben wird. Als Mischer kann ein herkömmlicher Zementkühler vorgesehen werden, der Mischeigenschaften besitzt. Es ist auch möglich, eine derartige Mahlanlage mit einer im geöffneten Kreislauf arbeitenden Kreislaufmahlanlage für Hüttensand zu kombinieren. Für die Herstellung des erfindungsgemäßen Zements wird dann nur der Hüttensandgrieß aus dieser Mahlanlage eingesetzt, ggf. auch Hüttensandmehl in mehr oder weniger geringen Mengen zur Einstellung optimaler Eigenschaften.

Anhand von Zeichnungen werden die erfindungsgemäßen Anlagen näher erläutert.
- Fig. 1: zeigt eine Kreislaufmahlanlage mit geöffnetem Kreislauf zur Herstellung eines hüttensandhaltigen Portlandzements.
- Fig. 2: zeigt eine Zementmühle für Portlandhüttenzemente zur Herstellung des erfindungsgemäßen Zements.
- Fig. 3: zeigt ein Blockschaltbild einer Mischanlage zur Herstellung von Portlandhüttenzementen nach der Erfindung.

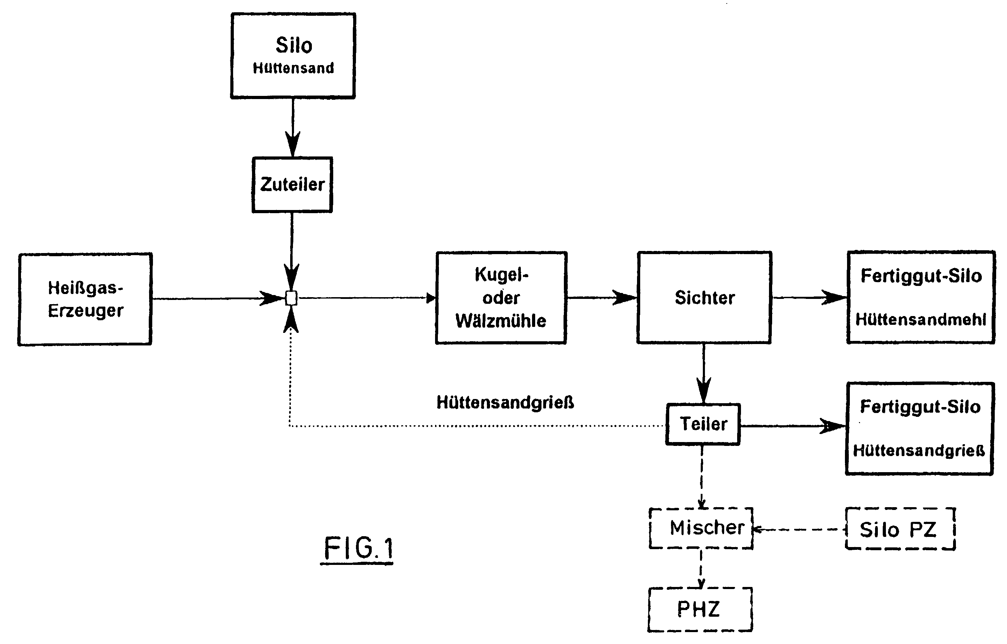

In Fig. 1 ist eine Mahlanlage gezeigt, die ein Silo für Hüttensand aufweist, der mittels Fördermittel über einen Zuteiler zu einer Kugel- oder Wälzmühle gelangt. Diese zerkleinert das Material mit einer Mahlfeinheit bis 3000 cm²/g nach Blaine. Ein nachgeschalteter Sichter trennt das Material in einen Bestandteil Hüttensandmehl mit einer Mahlfeinheit von zum Beispiel 4000 cm²/g nach Blaine. Ein anderer Teil wird als Hüttensandgrieß abgezweigt, zum Beispiel mit einer Mahlfeinheit von 2000 cm²/g nach Blaine. Der Hüttensandgrieß wird dann über einen Teiler zu einem Fertiggutsilo für Hüttensandgrieß geschickt. Falls Hüttensandgrieß nicht oder nur in geringerem Umfang gewonnen werden soll, kann er zurückgeführt werden in die Kugel- oder Wälzmühle, um feiner gemahlen zu werden. Die in Fig. 1 dargestellte Mahlanlage ist daher sowohl für einen herkömmlichen hüttensandhaltigen Portlandzement als auch für einen erfindungsgemäßen, Hüttensandgrieß enthaltenden Portlandzement. Zur Herstellung des erfindungsgemäßen hüttensandhaltigen Zements ist daher der Einsatz zusätzlicher Komponenten nicht erforderlich bzw. nur in beschränktem Umfang.

Alternativ ist in Fig. 1 in gestrichelten Linien angegeben, daß der vom Sichter kommende Hüttensandgrieß unmittelbar in einen Mischer eingetragen werden kann, indem von einem Silo Portlandzement eingegeben wird zur Mischung eines Portlandhüttenzements nach der Erfindung mit den jeweils gewünschten Anteilen. Der Mischer kann ein koninuierlicher oder diskontinuierlicher Mischer sein, wobei im letzteren Fall, wie in Fig. 1 gezeigt, ein Silo vor den Mischer zu schalten ist, der dann seinerseits aus einer an sich bekannten Mahlanlage für Portlandzement versorgt wird.

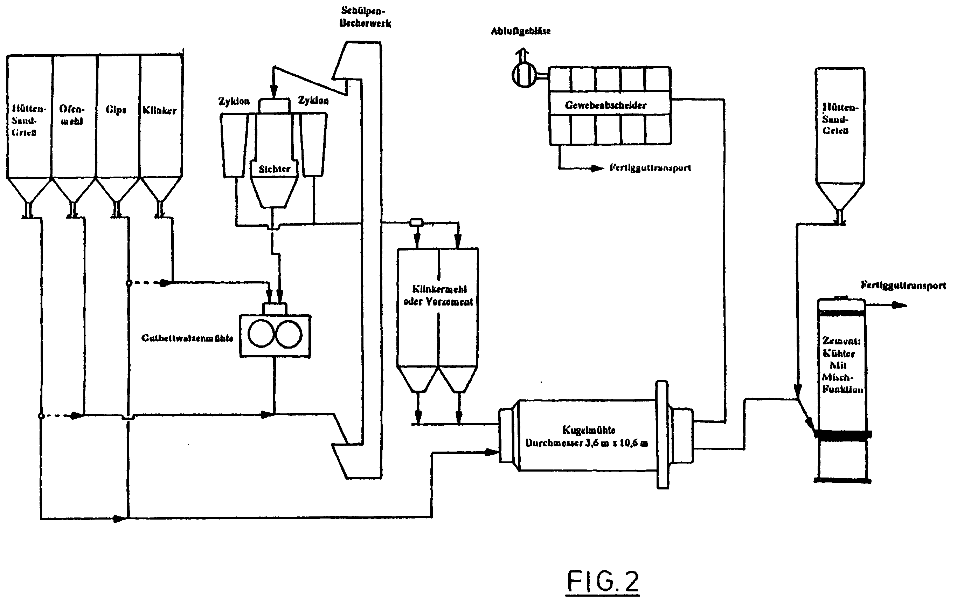

Bei der Anlage nach Fig. 2 handelt es sich um eine im Prinzip bekannte zweistufige Mahlanlage für Portlandzemente. Wie erkennbar, sind zwei Silos für Hüttensandgrieße vorgesehen, wobei das eine Silo (links in Fig. 2) über geeignete Fördermittel mit einer Kugelmühle verbunden ist. Mit der Kugelmühle ist über ein Fördermittel auch ein Silo für Gips verbunden. Ein Klinkersilo ist über ein Fördermittel mit einer Gutbettwalzenmühle verbunden, die auch vom Ausgang eines Sichters beschickt wird. Die Gutbettwalzenmühle mahlt gemeinsam Klinker und Hüttensandgrieß, wobei der Vorzement dann in entsprechenden Zwischensilos gelagert und von dort zur Kugelmühle geschickt wird. Über geeignete Fördermittel ist die Kugelmühle mit einem Zementkühler mit Mischfunktion verbunden, wobei dessen Eingang über geeignete Fördermittel auch mit dem weiteren Silo für Hüttensandgrieß verbunden ist. Zur Abscheidung von Staub ist die Kugelmühle mit einem Gewebeabscheider verbunden. Die in Fig. 2 dargestellte Mahlanlage ist herkömmlicher Art mit Ausnahme des rechten Silos für Hüttensandgrieß, das mit dem Mischer verbunden ist. Die gezeigte Anlage kann daher wahlweise für herkömmlichen Portlandhüttenzement und für den erfindungsgemäßen Zement eingesetzt werden.

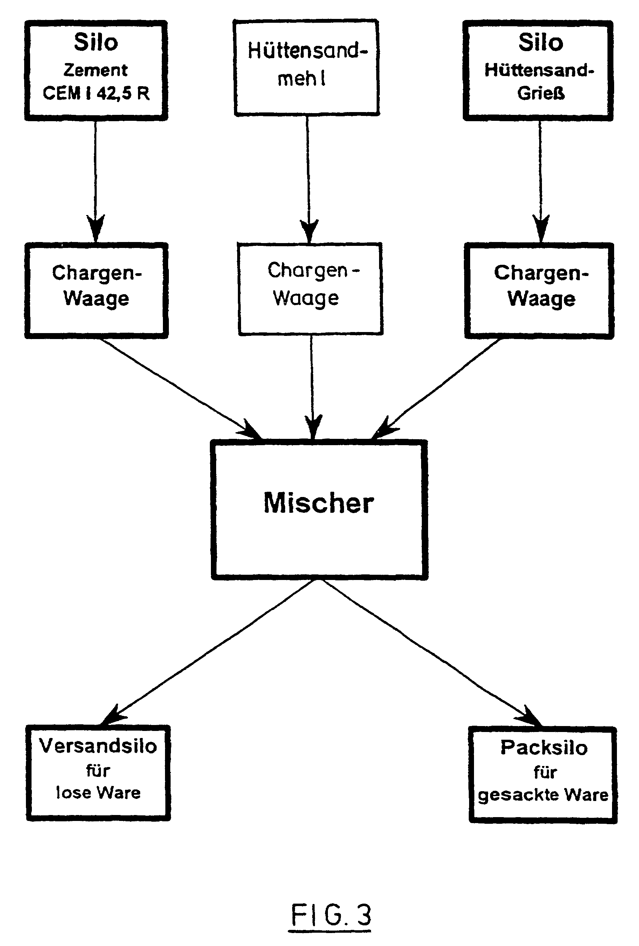

Fig. 3 zeigt eine Mischanlage zur Herstellung des erfindungsgemäßen Zements mit Silos für einen Portlandzement, zum Beispiel CEM I 42,5 R, für Hüttensandmehl und für Hüttensandgrieß. Die Silos sind über Chargenwaagen mit einem an sich bekannten Mischer verbunden, von dem aus das Gut zu einem Packsilo für gesackte Ware oder zu einem Versandsilo für lose Ware gelangt. Auch derartige Mischanlagen sind allgemein bekannt.

## Patentansprüche

1. Zement wie Portlandhüttenzement, **dadurch gekennzeichnet, dass** er aus einer Mischung von Portlandzement und/oder Portlandzement mit Anteilen an zugelassenen mineralischen Zumahlstoffen und Hüttensandgrieß und ggf. weiteren zugelassenen Zumahlstoffen besteht., wobei der Hüttensandgrießanteil in der fertigen Mischung eine spezifische Oberfläche bis höchstens 2500 cm²/g nach Blaine aufweist.

2. Zement nach Anspruch 1, **dadurch gekennzeichnet, daß** der Hüttensandgrießanteil in der fertigen Mischung eine spezifische Oberfläche bis höchstens 2100 cm²/g nach Blaine aufweist, vorzugsweise von höchstens 2000 cm²/g nach Blaine.

3. Zement nach Anspruch 1 oder 2, **dadurch gekennzeichnet, daß** der Anteil von Hüttensandgrieß 6 bis 80% beträgt.

4. Zement nach Anspruch 1 oder 2, **dadurch gekennzeichnet, daß** der Anteil von Hüttensandgrieß 6 bis 65% beträgt.

5. Zement nach Anspruch 1 oder 2, **dadurch gekennzeichnet, daß** der Anteil von Hüttensandgrieß 6 bis 35% beträgt.

6. Zement nach Anspruch 1 oder 2, **dadurch gekennzeichnet, daß** der Anteil von Hüttensandgrieß 6 bis 20% beträgt.

7. Zement nach Anspruch 1, **dadurch gekennzeichnet, daß** es einen Anteil Hüttensandgrieß von bis zu 5% aufweist.

8. Zement nach Anspruch 7, **dadurch gekennzeichnet, daß** bei Anwendung auf Standardzemente diese eine spezifische Oberfläche von mindestens 2500 cm²/g nach Blaine aufweisen.

9. Anlage zur Herstellung eines Zements nach einem der Ansprüche 1 bis 8, **gekennzeichnet durch** ein erstes Silo für Hüttensand, das über ein Fördermittel mit einer Kugel- oder Wälzmühle mit einem Sichter verbunden ist, wobei der Sichter mit einem Ausgang über ein Fördermittel mit einem Silo für Hüttensandmehl und und für die Zufuhr von Hüttensandgrieß mit einem zweiten Ausgang mit einem Mischer verbunden ist, und **durch** ein zweites Silo für Portlandzement oder eine Mahlanlage für Portlandzement, die über Fördermittel ebenfalls mit dem Mischer verbunden ist.

10. Anlage zur Ermahlung eines Portlandhüttenzements nach einem der Ansprüche 1 bis 8, **dadurch gekennzeichnet, daß** eine aus einer Gutbettwalzenmühle und einer Kugelmühle bestehende zweistufige Mahlanlage für den Klinker vorgesehen ist und der Ausgang der Kugelmühle mit einem Mischer verbunden ist, der mit dem Ausgang eines Silos für Hüttensandgrieß verbunden ist.

11. Anlage nach Anspruch 10, **dadurch gekennzeichnet, daß** der Mischer ein Zementkühler mit Mischfunktion ist.

12. Anlage nach Anspruch 10 oder 11, **dadurch gekennzeichnet, daß** ein Silo für Hüttensandgrieß über ein Fördermittel unmittelbar mit einem Mischer verbunden ist.

## Claims

1. Cement, like Portland blast furnace cement, **characterized in that** it consists of a mixture of Portland cement and/or Portland cement with shares of approved mineral blending materials and granulated blast furnace slag and, as the case may be, additional approved blending materials, whereby the proportion of granulated blast furnace slag in the finished mixture has a specific surface of up to a maximum of 2500 cm²/g according to Blaine.

2. Cement according to claim 1, **characterized in that** the share of granulated blast furnace slag in the finished mixture has a specific surface of up to a maximum of 2100 cm²/g according to Blaine, preferably a maximum of 2000 cm²/g according to Blaine.

3. Cement according to claim 1 or 2, **characterized in that** the share of granulated blast furnace slag is between 6 and 80%.

4. Cement according to claim 1 or 2, **characterized in that** the share of granulated blast furnace slag is between 6 and 65%.

5. Cement according to claim 1 or 2, **characterized in that** the share of granulated blast furnace slag is between 6 and 35%.

6. Cement according to claim 1 or claim 2, **characterized in that** the share of granulated blast furnace slag is between 6 and 20%.

7. Cement according to claim 1, **characterized in that** it has a share of granulated blast furnace slag of up to 5%.

8. Cement according to claim 7, **characterized in that**, when used on standard cements, these have a specific surface of at least 2500 cm²/g according to Blaine.

9. Device for producing a cement according to one of claims 1 through 8, **characterized by** a first silo for granulated blast furnace slag, which is connected with a ball mill or roller mill with a classifier via a conveyor, whereby the classifier is connected with an outlet via a conveyor with a silo for granulated blast furnace slag and with a second outlet with a mixer for the supply of granulated blast furnace slag and by a second silo for Portland cement or a milling device for Portland cement, which is also connected with the mixer via a conveyor.

10. Device for the milling of a Portland blast furnace cement according to one of claims 1 through 8, **characterized in that** a two-tiered milling device consisting of a Gutbett roller mill and a ball mill is provided for the clinker and the outlet of the ball mill is connected with a mixer, which is connected with the outlet of a silo for granulated blast furnace slag.

11. Device according to claim 10, **characterized in that** the mixer is a cement cooler with mixing functionality.

12. Device according to claim 10 or 11, **characterized in that** a silo for granulated blast furnace slag is connected directly with a mixer via a conveyor.

## Revendications

1. Ciment du type ciment de haut fourneau Portland, **caractérisé en ce qu'**il est composé d'un mélange de ciment Portland et/ou de ciment Portland contenant du sable de laitier et des agrégats minéraux de pulvérisation homologués, ainsi qu'éventuellement d'autres agrégats de pulvérisation homologués et que dans le mélange final la partie sable de laitier a une surface spécifique selon Blaine ne dépassant pas les 2500 cm²/g.

2. Ciment selon la revendication 1, **caractérisé en ce que** la partie sable de laitier, dans le mélange final, possède une surface spécifique selon Blaine ne dépassant pas les 2100 cm²/g et de préférence une surface spécifique selon Blaine ne dépassant pas les 2000 cm²/g.

3. Ciment selon les revendications 1 ou 2, **caractérisé en ce que** la partie sable de laitier est de 6 à 80%.

4. Ciment selon les revendications 1 ou 2, **caractérisé en ce que** la partie sable de laitier est de 6 à 65%.

5. Ciment selon les revendications 1 ou 2, **caractérisé en ce que** la partie sable de laitier est de 6 à 35%.

6. Ciment selon les revendications 1 ou 2, **caractérisé en ce que** la partie sable de laitier est de 6 à 20%.

7. Ciment selon la revendication 1, **caractérisé en ce qu'**il comporte du sable de laitier à hauteur de 5% maximum.

8. Ciment selon la revendication 7, **caractérisé en ce que** ce ciment, appliqué aux ciments standards, leur confère une surface spécifique selon Blaine d'au moins 2500 cm²/g.

9. Installation pour la fabrication de ciment selon l'une des revendications 1 à 8, **caractérisée en ce qu'**un premier silo à sable de laitier est relié par un moyen de transport à un broyeur à boulets ou à rouleaux et à un séparateur dont l'une des sorties est reliée par un moyen de transport à un silo à farine de laitier et **en ce qu'**une deuxième sortie est reliée à un mélangeur assurant son alimentation en sable de laitier et par un deuxième silo à ciment Portland ou une installation de broyage pour ciment Portland qui est également reliée via un moyen de transport à un mélangeur.

10. Installation pour le broyage d'un ciment de haut fourneau Portland selon une des revendications 1 à 8, **caractérisée en ce qu'**un système de broyage à deux étages qui est composé d'un broyeur à rouleaux Gutbett et d'un broyeur à boulets est prévu pour le clinker et que la sortie du broyeur à boulets est reliée à un mélangeur, relié à son tour à la sortie d'un silo à sable laitier.

11. Installation selon la revendication 10, **caractérisée en ce que** le mélangeur est un refroidisseur à ciment intégrant la fonctionnalité de mélangeur.

12. Installation selon les revendications 10 ou 11, **caractérisée en ce qu'**un silo à sable de laitier est relié directement à un mélangeur à l'aide d'un moyen de transport.
